# FASCICULE DE BREVET EUROPEEN

(11) **EP 3 265 688 B1**
(45) Date de publication et mention de la délivrance du brevet: **29.04.2020**
(21) Numéro de dépôt: 16707824.5
(22) Date de dépôt: 04.03.2016
(51) Int. Cl.: F16D 55/226, F16D 65/097

(54) **FREIN A DISQUE COMPORTANT AU MOINS UN RESSORT PERFECTIONNE DE RAPPEL ELASTIQUE D'UN PATIN DE FREINAGE, RESSORT DE RAPPEL ELASTIQUE, ET KIT DE REMPLACEMENT**
BREMSSCHEIBE MIT MINDESTENS EINER VERBESSERTEN ELASTISCHEN RÜCKSTELLFEDER EINES BREMSBELAGES, ELASTISCHE RÜCKSTELLFEDER UND AUSTAUSCHKIT
BRAKE DISC COMPRISING AT LEAST ONE IMPROVED RESILIENT RETURN SPRING OF A BRAKE PAD, RESILIENT RETURN SPRING, AND REPLACEMENT KIT

(30) Priorité: 06.03.2015 FR 1551892
(43) Date de publication de la demande: 10.01.2018
(73) Titulaire: Foundation Brakes France, 93700 Drancy (FR)
(72) Inventeur: FOUCOIN, Alexandre, 11000 CARCASSONNE (FR); MONTEGU, Didier, 94420 LE PLESSIS TREVISE (FR); LABARRE, Xavier, 49250 Saint Georges Du Bois (FR)
(74) Mandataire: Brevalex
(86) Numéro de dépôt international: PCT/EP2016/054696
(87) Numéro de publication internationale: WO 2016/142304

(56) Documents cités:
- DE-A1-102012 016 737
- FR-A1- 2 984 438
- US-B1- 7 040 464

## Description

### DOMAINE TECHNIQUE DE L'INVENTION

L'invention se rapporte à un frein à disque de véhicule automobile.

L'invention se rapporte notamment à frein à disque dont un ressort de rappel élastique d'un patin de freinage comporte des moyens de rattrapage du jeu d'usure d'une garniture de friction du patin de freinage.

### ARRIERE PLAN TECHNIQUE DE L'INVENTION

L'invention se rapporte par exemple à un frein à disque de véhicule automobile du type décrit et représenté dans la demande de brevet français FR-A1-3.004.500 qui comporte :
- un disque de frein qui s'étend dans un plan transversal à un axe d'orientation axiale de rotation du disque ;
- un support fixe par rapport à un châssis du véhicule ;
- au moins un patin de freinage dont chacun comporte une garniture de friction dont une face transversale de friction coopère avec une piste de freinage associée du disque, le patin de freinage étant monté coulissant axialement dans le support entre une position avant active dans laquelle ladite face de friction est en appui contre la piste annulaire associée du disque, et une position arrière inactive dans laquelle ladite face de friction est espacée axialement de ladite piste annulaire associée du disque, d'un jeu déterminé de fonctionnement ;
- au moins un ressort de rappel élastique du patin de freinage vers sa position inactive, qui est par exemple interposé entre le patin de freinage et le support.

Dans un frein à disque, le coulissement des patins de freinage vers leur position active est commandé par un piston. Les deux patins de freinage pincent alors fortement le disque pour ralentir sa rotation. L'opération de freinage est ainsi une opération active.

Les patins de freinage sont repoussés vers leur position inactive par le disque en rotation. Il s'agit donc d'une opération passive.

Il arrive cependant que le disque ne repousse pas les patins de freinage avec suffisamment de force pour les écarter à distance suffisante du disque. Ceci peut par exemple se produire lorsque le coulissement des patins de freinage est de qualité insuffisante, voire grippé, ou bien si la conception crée de la "restitution".

Bien que les patins de freinage ne soient plus serrés activement contre le disque, chacune des pistes annulaires de ce dernier frotte néanmoins en permanence contre la garniture de friction portée par le patin de freinage associé. Les garnitures de friction subissent ainsi une usure non fonctionnelle prématurée.

De plus, ce frottement permanent est susceptible de provoquer un échauffement dommageable pour certains organes du frein à disque.

Ce frottement permanent provoque aussi l'apparition d'un couple résiduel qui s'oppose à la rotation du disque. Ceci augmente la consommation du véhicule, tout en diminuant les performances du véhicule.

Pour résoudre ces problèmes d'usure et d'échauffement, le document mentionné précédemment propose un frein à disque dans lequel le ressort de rappel élastique comporte des moyens de rattrapage d'un jeu d'usure de la garniture de friction du patin de freinage qui se déforment plastiquement lorsque la course du patin de freinage jusqu'à sa position active est supérieure audit jeu déterminé de fonctionnement.

A cet effet, le ressort de rappel élastique, qui est interposé entre le support fixe du frein à disque et un patin de freinage associé, comporte au moins un tronçon d'orientation axiale qui est déformable élastiquement par traction entre un état de repos et un état d'élongation maximale dont la valeur est égale au jeu déterminé de fonctionnement, le ressort comportant au moins un tronçon déformable plastiquement, sous l'effet d'un effort de traction axiale, formant lesdits moyens de rattrapage du jeu d'usure, ce tronçon déformable plastiquement étant conformé pour être allongé plastiquement lorsque la course du patin de freinage jusqu'à sa position active est supérieure au jeu déterminé de fonctionnement.

Dans ce document, le ressort de rappel élastique comporte une portion de fixation du ressort de rappel élastique sur le support fixe, et une branche de raccordement, rigide et d'orientation générale axiale dont le tronçon d'extrémité libre est conformé pour coopérer avec le patin de freinage associé, par exemple avec une portion d'une oreille latérale appartenant à une plaque porte-garniture du patin de freinage. Selon une autre conception connue, le tronçon d'extrémité libre est fixé sur le patin de freinage, par exemple par rivetage.

De telles conceptions peuvent à un montage et un assemblage complexes pour assurer la coopération du ressort de rappel demetavec le patin de freinage.

Ces inconvénients existent aussi lorsque le ressort de rappel ne comporte pas de tronçon déformable plastiquement.

### BREF RESUME DE L'INVENTION

Afin de remédier à cet inconvénient, l'invention propose un frein à disque qui comporte :
- un disque de frein qui s'étend dans un plan transversal à un axe d'orientation axiale de rotation du disque ;
- un support fixe par rapport à un châssis du véhicule ;
- au moins un patin de freinage qui comporte une plaque transversale verticale porte-garniture :
   -- qui porte une garniture de friction dont une face transversale de friction coopère avec une piste de freinage associée du disque, le patin de freinage étant monté coulissant axialement dans le support fixe entre une position avant active dans laquelle ladite face de friction est en appui contre la piste de freinage associée du disque, et une position arrière inactive dans laquelle ladite face de friction est espacée axialement de ladite piste de freinage associée du disque, d'un jeu déterminé de fonctionnement ;
   -- qui comporte, à chacune de ses deux extrémités transversales opposées, une oreille latérale d'orientation transversale qui est montée coulissante dans une coulisse associée du support fixe ;
   -- dont chaque oreille latérale est munie d'un ressort de patin qui est fixé sur l'oreille latérale associée,
- et au moins un ressort de rappel élastique du patin de freinage vers sa position inactive comportant :
   -- une portion de fixation du ressort de rappel élastique sur le support fixe ;
   -- une branche de raccordement, d'orientation axiale parallèle à la direction de coulissement du patin de freinage, qui se prolonge par une patte active qui agit sur le patin de freinage,
caractérisé en ce que ladite patte active agit sur une branche du ressort de patin associé.

Selon d'autres caractéristiques du frein à disque :
- ladite branche du ressort de patin s'étend dans un plan vertical orthogonal au plan de la plaque porte-garniture, et est une branche incurvée dont la convexité est orientée axialement vers l'arrière ; et
- ladite patte active s'étend dans un plan transversal orthogonal au plan de la branche de raccordement et coopère avec une portion concave de ladite branche incurvée du ressort de patin ;
- la patte active présente un profil incurvé dont la convexité est orientée axialement vers l'arrière et qui est complémentaire du profil de ladite portion concave ;
- ladite portion concave de la branche incurvée du ressort de patin est une portion de profil cylindrique circulaire ;
- chaque ressort de patin comporte une branche de fixation qui pince élastiquement l'oreille latérale pour assurer la fixation du ressort de patin sur l'oreille latérale ;
- la portion de fixation du ressort de rappel élastique sur le support fixe est reliée à l'extrémité d'une première branche du ressort de rappel élastique d'orientation axiale parallèle à la direction de coulissement du patin de freinage ; et
- ladite branche du ressort de patin s'étend dans un plan vertical entre la première branche et la branche de raccordement du ressort de rappel élastique ;
- ladite branche du ressort de rappel élastique est une branche rigide conformée en une bande qui s'étend dans un plan parallèle à un plan axial.
- le ressort de rappel élastique comporte des moyens de rattrapage d'un jeu d'usure de la garniture de friction du patin de freinage, qui se déforment plastiquement lorsqu'une course du patin de freinage jusqu'à sa position active de freinage, est supérieure audit jeu déterminé de fonctionnement ;
- le ressort de rappel élastique est réalisé en une seule pièce par découpe et formage d'une feuille de matériau.

L'invention propose un ressort de rappel élastique axial d'un patin de freinage, d'un frein à disque vers une position inactive, dans lequel le ressort de rappel élastique comporte :
- une portion de fixation du ressort de rappel élastique sur le support fixe qui est reliée à l'extrémité d'une première branche du ressort de rappel élastique ;
- une branche de raccordement, d'orientation axiale parallèle à la direction de coulissement du patin de freinage, qui se prolonge par une parte active qui coopère avec une partie associée du patin de freinage,
caractérisé en ce que ladite patte active présente un profil de forme complémentaire de celui d'une branche incurvée d'un ressort de patin équipant une oreille latérale de la plaque porte garniture du patin de freinage.

Selon d'autres caractéristiques du ressort :
- ladite patte active s'étend dans un plan orthogonal à la direction axiale de la branche de raccordement ;
- ladite patte active présente un profil en arc de cylindre dont la convexité est orientée axialement vers l'arrière.

L'invention propose un kit de remplacement pour un frein à disque de véhicule automobile selon l'invention, caractérisé en ce qu'il comporte au moins un patin de freinage et deux ressorts de rappel élastique appariés audit patin de freinage dont chacun est réalisé selon l'invention.

Le kit de remplacement peut comporter de plus deux ressorts de montage du patin de freinage dans le frein à disque.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective éclatée qui représente un frein à disque comportant un exemple de ressort de rappel élastique en une seule pièce selon l'état de la technique ;
- la figure 2 est une vue de face qui représente le support fixe du frein à disque de la figure 1 muni de coulisses pour recevoir des ressorts de rappel élastique d'un patin de freinage associé ;
- la figure 3A est une vue schématique en perspective qui illustre un exemple de réalisation dans lequel chaque oreille d'un patin de freinage est équipée d'un ressort « radial » ;
- la figure 3B est une vue de détail de la représentation à la figure 3A ;
- la figure 4 est une vue partielle en perspective illustrant l'assemblage d'un patin de freinage avec un ressort radial dans un bras d'une chape formant support fixe muni d'une glissière rapportée ;
- la figure 5 est une vue de détail en perspective qui représente un ressort de rappel élastique du patin de freinage en une seule pièce déformable plastiquement selon une alternative de conception ;

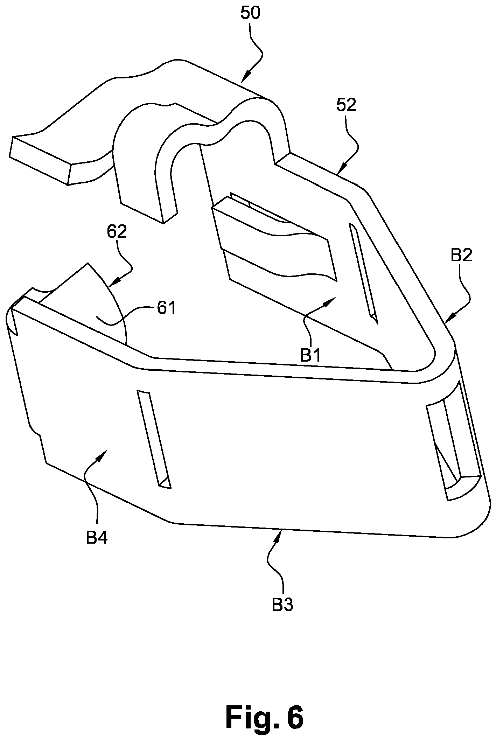

- la figure 6 est une vue en perspective illustrant un exemple de réalisation d'un ressort de rappel élastique selon l'invention conçu pour sa fixation sur le support fixe par l'intermédiaire d'une glissière et dont la patte active selon l'invention agit sur un ressort de patin ;
- la figure 7 est une vue en perspective illustrant les composants en position assemblés, l'ensemble étant illustré monté sur le frein à disque et dans un état « neuf » du ressort de rappel élastique non déformé élastiquement ni plastiquement.

### DESCRIPTION DETAILLEEE DES FIGURES

Dans la suite de la description, des éléments présentant une structure identique ou des fonctions analogues seront désignés par des mêmes références.

On adoptera à titre non limitatif et sans référence à la gravité terrestre, des orientations axiales, verticales et transversales en référence au trièdre "A,V,T" des figures.

L'orientation axiale "A" est dirigée d'arrière en avant, parallèlement à un axe "B" de rotation du disque 12.

On définit le plan horizontal comme étant un plan axial transversal.

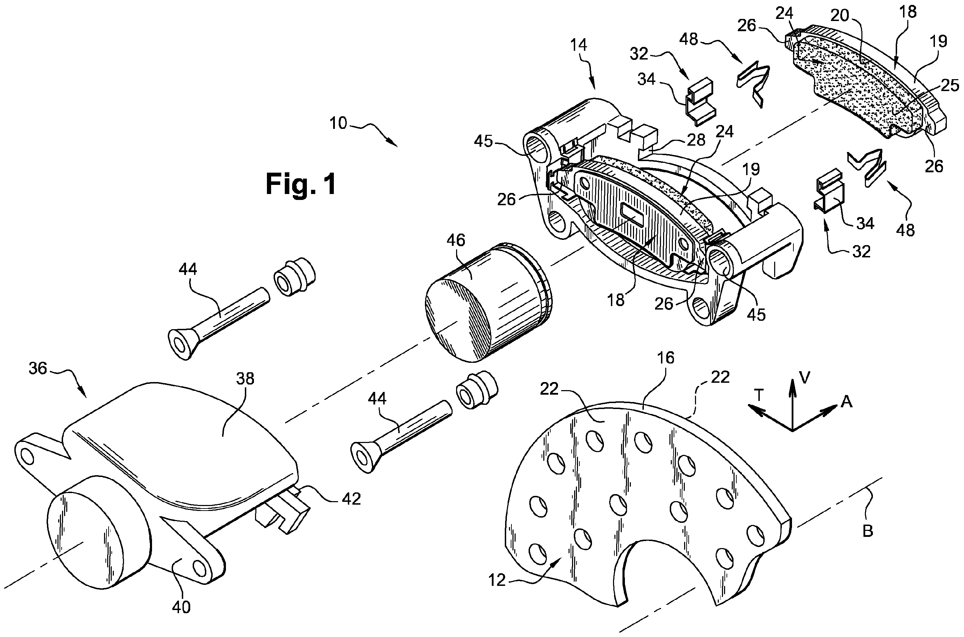

On a représenté schématiquement à la figure 1 un frein à disque 10 de véhicule automobile. Il s'agit ici d'un frein à disque 10 dit à "étrier flottant" ou "étrier coulissant".

De manière connue, le frein à disque comporte un disque 12 qui est monté tournant autour d'un axe "B" de rotation d'orientation axiale. Le disque 12 est solidaire en rotation avec une roue (non représentée) du véhicule automobile.

Le frein à disque 10 comporte un support 14, aussi appelé chape, qui est monté fixe par rapport au châssis (non représenté) du véhicule. Le support fixe 14 chevauche un bord périphérique 16 du disque 12.

Deux patins de freinage opposés 18, arrière et avant (aussi appelés intérieur et extérieur) sont montés coulissant axialement dans le support fixe 14 de part et d'autre du disque 12.

Les deux patins de freinage 18, arrière et avant, présentent une structure et un agencement sur le support fixe 14 qui sont identiques par symétrie par rapport à un plan transversal vertical médian.

Par la suite, on ne décrira que le patin de freinage 18 arrière, à gauche en considérant la figure 1, la description étant applicable au patin de freinage 18 avant en inversant les directions avant et arrière.

Le patin de freinage arrière 18 se présente sous la forme d'une plaque transversale verticale 19 support de garniture de friction. Le patin de freinage arrière 18 présente une face avant 20, qui est orientée vers une face arrière 22 en vis à vis du disque 12 qui est en forme d'une piste annulaire. La face avant 20 porte une garniture de friction 24 dont une face transversale et verticale avant de friction 25 est apte à coopérer avec la face 22 du disque 12.

Chacune des extrémités transversales opposées du patin de freinage 18 comporte une oreille latérale 26 qui est montée coulissante, avec jeu, dans une coulisse 28 associée d'un bras associé 27 de la chape ou support fixe 14.

Chaque coulisse 28 est d'orientation axiale et présente, en section par un plan vertical et transversal orthogonal aux axes A et B, une forme de "C" ouvert transversalement vers l'oreille latérale associée 26 du patin de freinage 18. La coulisse 28 est délimitée transversalement par un fond 30 d'orientation axiale et globalement verticale. Outre le fond vertical 30, la coulisse est délimitée par un fond horizontal supérieur 33 et par un fond horizontal inférieur 35, tous deux d'orientation axiale.

Dans l'exemple représenté aux figures, une glissière 32 est interposée transversalement entre chaque oreille latérale 26 et la coulisse 28 associée.

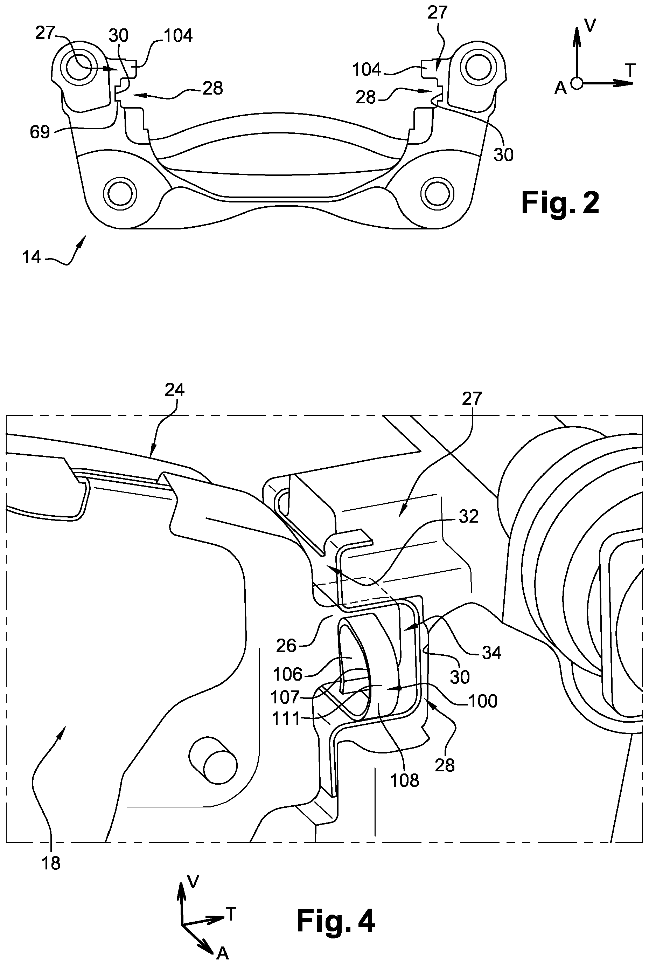

Chaque glissière 32 est un élément lamellaire formé par un ressort à lame de section en "C" qui épouse les parois de la coulisse 28 associée (voir notamment figure 4).

La glissière comporte une aile supérieure de glissement et d'appui, d'orientation générale horizontale, qui est interposée entre l'oreille 26 du patin de frein 18 et le fond supérieur 33 du logement 28, un fond 34 d'orientation verticale, qui est interposée entre l'oreille 26 du patin de frein et le fond vertical 30, et une aile élastique de maintien qui est agencée sous l'oreille 26 du patin de frein 18.

La glissière 32 comporte ainsi un fond 34 d'orientation verticale et axiale qui est agencé en regard du fond vertical 30 de la coulisse 28.

La glissière 32 permet un degré déterminé de mouvement du patin de freinage 18 dans le support fixe 14, c'est-à-dire, généralement mais de manière non limitative, un mouvement de coulissement axial, et un mouvement de coulissement transversal accompagnant la rotation du disque 12, lors d'une action de freinage.

Le patin de frein 18 comporte deux oreilles 26 latérales opposées de montage dont chacune est reçue dans un logement, ou coulisse, 28 associé d'un bras associé de la chape ou support fixe 14.

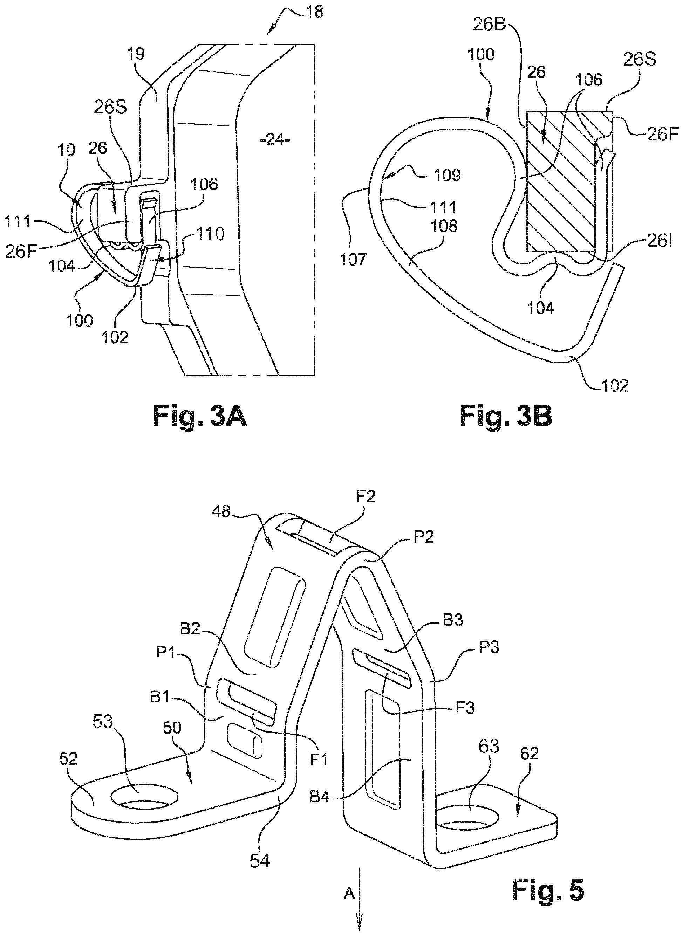

Comme représenté aux figures 3A et 3B, chaque oreille 26 est de forme générale parallélépipédique rectangle et elle est délimitée verticalement par une facette plane supérieure 26S d'orientation générale horizontale et axiale et par une facette plane inférieure 26I d'orientation générale horizontale et axiale.

Chaque oreille 26 est aussi délimitée axialement par une facette plane avant 26F d'orientation générale verticale et transversale, et par une facette plane arrière 26B d'orientation générale verticale et transversale.

Chaque oreille latérale 26 s'étend dans le prolongement de la plaque porte-garniture 19 et la distance axiale séparant les facettes 26F et 26B est ici égale à l'épaisseur axiale de la plaque porte-garniture 19.

Chaque oreille est équipée d'un ressort, appelé ressort de montage de patin, du type de celui décrit et représenté dans le document FR-A1-2.925.636 et dont un exemple est illustré en détail aux figures 3A, 3B et 4.

La figure 4 illustre l'assemblage d'un ressort de montage sur une oreille latérale 26 et le montage de l'oreille ainsi équipée dans une glissière associée 32.

On a représenté schématiquement, aux figures 3A, 3B et 4, un ressort 100 de montage du patin de freinage 18, aussi appelé ressort radial ou "ressort escargot", qui équipe chacune des oreilles latérales opposées 26 d'un patin de freinage 18 pour le montage et le guidage du patin de freinage 18 dans les coulisses axiales associées 28 du support fixe 14, avec, ou non, la présence de glissières 32.

De manière connue, chaque ressort 100 de patin comporte une branche inférieure 102 de glissement qui coopère avec un fond horizontal inférieur 35 de la coulisse associée et qui sollicite la facette horizontale supérieure 26S de l'oreille 26 en appui verticalement vers le haut contre le fond horizontal 33 supérieur en vis-à-vis de la coulisse 28.

Selon la conformation illustrée, le ressort 100 de patin est communément appelé "ressort escargot" et il comporte une branche supérieure 104 prenant appui sous la facette inférieure horizontale 26I de l'oreille 26 du patin de freinage 18

Cette branche 104 fait partie d'une branche de fixation, ou agrafe, 106 qui pince élastiquement l'oreille 26 pour assurer la fixation du ressort 100 de patin sur l'oreille 26.

Le ressort 100 de patin comporte encore une branche incurvée 108 qui relie la branche de fixation 106 à la branche inférieure 102 de glissement en assurant principalement l'élasticité du ressort de patin 100.

Le ressort de patin 100 comporte enfin une branche libre 110 qui prolonge la branche inférieure 102 de glissement et qui ferme le profil de manière à éviter l'entrelacement des ressorts stockés avant montage.

La branche 108 est une branche incurvée dont la convexité est orientée axialement vers l'arrière.

En position montée sur l'oreille latérale associée 26, le ressort de patin 100 s'étend dans un plan vertical orthogonal au plan de la plaque porte-garniture 19.

Le ressort de patin 100 est réalisé ici en une seule pièce sous la forme d'une bande en acier à ressort pliée.

La branche élastique 108 comporte notamment un tronçon arrière 109 en arc de cylindre circulaire dont une face externe convexe 107 est orientée axialement vers l'arrière et dont une face avant concave 111 est orientée axialement vers l'avant et s'étend en regard d'une face en vis-à-vis de l'oreille latérale 26.

Le patin de freinage 18 est ainsi monté coulissant selon une direction axiale, parallèle à l'axe de rotation B du disque 12, dans le support fixe 14 sur une course de fonctionnement entre :
- une position avant active dans laquelle la face transversale avant de friction 25 de la garniture de friction 24 est en appui contre la face 22 en vis à vis du disque 12 ; et
- une position arrière inactive dans laquelle la face transversale avant de friction 25 de la garniture de friction 24 du patin de freinage 18 est écartée axialement par rapport à la face associée 22 du disque 12, d'un jeu déterminé de fonctionnement "J1".

Lors d'une opération de freinage, le serrage des patins de freinage 18, depuis leur position inactive jusqu'à leur position active, est commandé par un étrier de frein 36 du frein à disque 10.

De manière connue, l'étrier 36 comporte une voûte 38 qui s'étend axialement au-dessus du support fixe 14 en le recouvrant et deux ailes arrière 40 et avant 42 qui s'étendent radialement depuis des bords d'extrémité arrière et avant de la voûte 38 vers l'axe "B".

L'aile avant 42 s'étend en regard du patin de freinage 18 avant, et l'aile arrière 40 s'étend en regard du patin de freinage 18 arrière.

L'étrier 36 est ici monté coulissant axialement par rapport au support fixe 14 par l'intermédiaire de deux colonnettes parallèles 44 de guidage dont chacune est reçue en coulissement dans un alésage axial associé 45 du support fixe 14.

De manière connue, l'aile arrière 40 de l'étrier 36 porte au moins un piston 46 axial dont une face transversale avant d'appui est susceptible, lors d'une opération de freinage, de coopérer avec la face transversale en vis à vis du patin de freinage arrière 18 pour le solliciter axialement vers l'avant, pour exercer un effort axial de serrage de la face transversale avant de friction 25 de la garniture de friction 24 en appui contre la face 22 en vis à vis du disque 12.

Par réaction, l'étrier 36 coulisse axialement vers l'arrière et, de manière symétrique, l'aile avant 42 sollicite le patin de freinage 18 avant pour serrer la face transversale arrière de friction 25 de la garniture de friction 24 du patin de freinage 18 avant en appui contre la face 22 avant en vis-à-vis du disque 12.

Lorsque, à l'issue de l'opération de freinage, le piston 46 cesse de solliciter le patin de freinage 18 arrière, le retour des patins de freinage 18, depuis leur position active vers leur position inactive, est généralement provoqué par la rotation du disque 12 qui "repousse" chaque patin de freinage 18 vers sa position inactive.

Néanmoins, dans certains cas, on a constaté que la force de répulsion exercée par le disque 12 n'est pas suffisante pour repousser chacun des patins de freinage 18 jusqu'à sa position inactive respective. La garniture de friction 24 des patins de freinage 18 continue ainsi à frotter contre le disque 12, alors qu'aucune action de serrage des garnitures de friction des patins de freinage par l'étrier 36 n'est commandée.

A l'issue d'une opération de freinage, pour garantir que chaque patin de freinage 18 revient dans une position inactive, le frein à disque 10 est équipé de moyens de rappel élastique du patin de freinage 18 vers sa position inactive. Ces moyens de rappel élastique sont réalisés sous la forme de ressorts de rappel élastique qui sont interposés entre le patin de freinage 18 et le support fixe 14.

Le frein à disque 10 comporte à titre d'exemple non limitatif quatre ressorts de rappel élastique 48, aussi appelés ressorts "écarteurs", dont chacun - à titre non limitatif - est ici agencé entre un bras 27 du support fixe 14 et une oreille latérale associée 26 d'un patin de freinage 18.

Ainsi, un patin de freinage 18, arrière ou avant, est ici associé à deux ressorts de rappel élastique 48 dont chacun coopère avec la plaque 19 porte-garniture de friction.

A titre non limitatif, les quatre ressorts 48 de rappel élastique sont de même conception globale et ils sont agencés de la même manière sur le support fixe 14. Le principe de conception d'un seul de ces ressorts 48 de rappel élastique du patin de freinage arrière 18 sera donc décrit ici en détail.

Un ressort de rappel élastique 48 se présente sous la forme d'une bande métallique, par exemple en acier, de section rectangulaire dont la largeur s'étend verticalement et qui réalisée par exemple par découpe, emboutissage et pliage d'une tôle d'acier inoxydable d'épaisseur constante.

En se reportant notamment à la figure 5, un ressort de rappel élastique 48 comporte une première portion 50, dite de fixation, en forme générale d'une patte de fixation 52 du ressort 48 sur le support fixe 14, qui est reliée à l'extrémité d'une première branche rigide B1 et qui s'étend dans un plan orthogonal pour être fixée sur une partie associée du support fixe 14, par exemple par rivetage au moyen d'un rivet non représenté qui s'étend à travers un trou circulaire 53 de la patte de fixation 52.

A partir de la première branche rigide rectiligne d'orientation axiale B1, le ressort de rappel élastique 48 se prolonge successivement par trois autres branches rigides rectilignes B2, B3 et B4 respectivement.

La première branche B1 a son extrémité proximale reliée au coude 54, tandis que son extrémité distale est située axialement hors de la coulisse 28 pour être reliée à la deuxième branche rigide B2.

La deuxième branche rigide B2 est reliée à la première branche rigide B1 par un premier pli P1 déformable.

Comme la première branche B1, la deuxième branche rigide B2 est conformée en une bande dans le prolongement de la première branche rigide B1.

De façon à ce que le premier pli P1 en forme de coude constitue une zone déformable plastiquement, cette portion est affaiblie mécaniquement, ici au moyen d'une fenêtre ou lumière F1 qui est ici une découpe débouchante de forme rectangulaire.

De la même manière, la troisième branche rigide B3 est reliée à la deuxième branche rigide B2 par un deuxième pli déformable plastiquement P2.

Le deuxième pli P2 est une portion coudée de la bande de matériau comportant une fenêtre F2.

Enfin, la quatrième branche B4 est reliée à la troisième branche rigide B3 par un troisième pli déformable plastiquement P3.

Le troisième pli P3 comporte une fenêtre F3 analogue aux fenêtres F1 et F2.

La quatrième branche rigide B4 est rectiligne et d'orientation générale axiale parallèle à la première branche rigide B1 et elle se prolonge ici par un tronçon d'extrémité libre avant destiné à être relié directement au patin de freinage 18 associé.

Le tronçon d'extrémité libre avant est ici réalisé par prolongement de la bande constitutive des branches Bi.

Selon les conceptions illustrées à la figure 1 ou à la figure 5, le tronçon d'extrémité libre avant du ressort de rappel élastique 48 est conformé en une patte active 62 qui est coudée à angle droit pour agir directement sur une portion en vis-à-vis de la plaque porte-garniture de friction (figure 1) ou pour être fixée directement sur une partie associée du patin de freinage 18 (figure 5), et par exemple de sa plaque 19 porte-garniture de friction.

Dans l'exemple illustré à la figure 5, la patte active 62 s'étend dans un plan orthogonal pour être fixée sur une partie associée du patin de freinage, par exemple par rivetage au moyen d'un rivet non représenté qui s'étend à travers un trou circulaire 63 de la patte active 62.

Aux figures, le ressort de rappel élastique 48 est représenté dans un état initial "neuf", c'est-à-dire avant toute déformation plastique des plis Pi.

Dans cet état, neuf ou initial, la première branche B1 et la quatrième branche rigide B4 sont sensiblement parallèles entre elles et d'orientation axiale en étant agencées à distance transversale l'une de l'autre.

Dans l'état - non représenté - de déformation plastique maximale du ressort de rappel élastique 48, les première et quatrième branches rigide B1 et B4 sont toujours sensiblement parallèles, d'orientation axiale et espacées l'une de l'autre sensiblement de la même distance, tandis que les trois plis Pi ont été déformés plastiquement.

A titre d'exemple, l'épaisseur de la bande de matériau est comprise entre 0,5 et 0,8 millimètre et le matériau est un acier inoxydable de référence X2CrNbCu21 ou de référence 304L (X2CrNi18-9 / X2CrNi19-11).

A titre d'exemple, le déplacement maximal correspondant à une usure maximale "J2" est égal à environ 14 millimètres.

Lorsque le patin de freinage 18 est sollicité vers sa position active par le piston 46, il parcourt tout d'abord le trajet correspondant au jeu "J1" déterminé de fonctionnement.

Lors de cette première partie de la course, le patin de freinage 18 entraîne la branche B4 du ressort de rappel élastique 48 de manière à tendre élastiquement le ressort de rappel élastique 48 entre la portion de fixation 50 fixée au support fixe 14, et la branche B4 reliée au patin de freinage 18.

Les parties déformables élastiquement du ressort de rappel élastique 48 atteignent alors leur état d'élongation maximale.

Les plis Pi se déforment, d'abord élastiquement, puis plastiquement.

La face transversale avant de la garniture de friction 24 du patin de freinage 18 est encore écartée, par rapport à la face ou piste annulaire associée du disque 12, d'une distance égale au jeu "J2" d'usure. Le patin de freinage 18 poursuit sa course axiale jusqu'à sa position active.

Lors de cette deuxième partie de course, les parties déformables élastiquement ne pouvant plus se déformer "élastiquement", l'effort de serrage est transmis aux plis Pi déformables plastiquement du ressort de rappel élastique 48.

Les plis Pi sont alors déformés plastiquement, les déformations élastiques des parties déformables plastiquement étant négligeables par rapport à leur déformation plastique.

Lorsque l'opération de freinage prend fin, le patin de freinage 18 est rappelé vers sa position inactive par les parties déformables élastiquement qui reprennent leur état de repos.

Le patin de freinage 18 est ainsi à nouveau écarté du disque 12 d'une distance égale au seul jeu "J1" déterminé de fonctionnement; le jeu "J2" d'usure ayant été absorbé par la déformation plastique des plis Pi déformables plastiquement.

Le ressort de rappel élastique 48 permet ainsi de garantir que le patin de freinage 18 est rappelé dans sa position inactive.

De plus, l'agencement de plis Pi déformables plastiquement permet d'éviter que l'effort de serrage à exercer par le piston 46 pour actionner le patin de freinage 18 vers sa position active ne devienne trop élevé.

En outre, en conservant un jeu "J1" de fonctionnement constant entre le patin de freinage 18 en position inactive et le disque 12, le temps de réponse du système de freinage demeure constant indépendamment de l'usure de la garniture de friction 24.

A usure complète maximale de la garniture de friction, le ressort de rappel élastique 48 est déformé plastiquement et, comme le patin de freinage usé 18, il doit être remplacé.

Selon les deux conceptions illustrées schématiquement aux figures 1 et 5, le ressort de rappel élastique comporte, de manière intégrée, la patte active 62 destinée à « agir » sur le patin de freinage, et notamment sur la plaque porte-garniture 19.

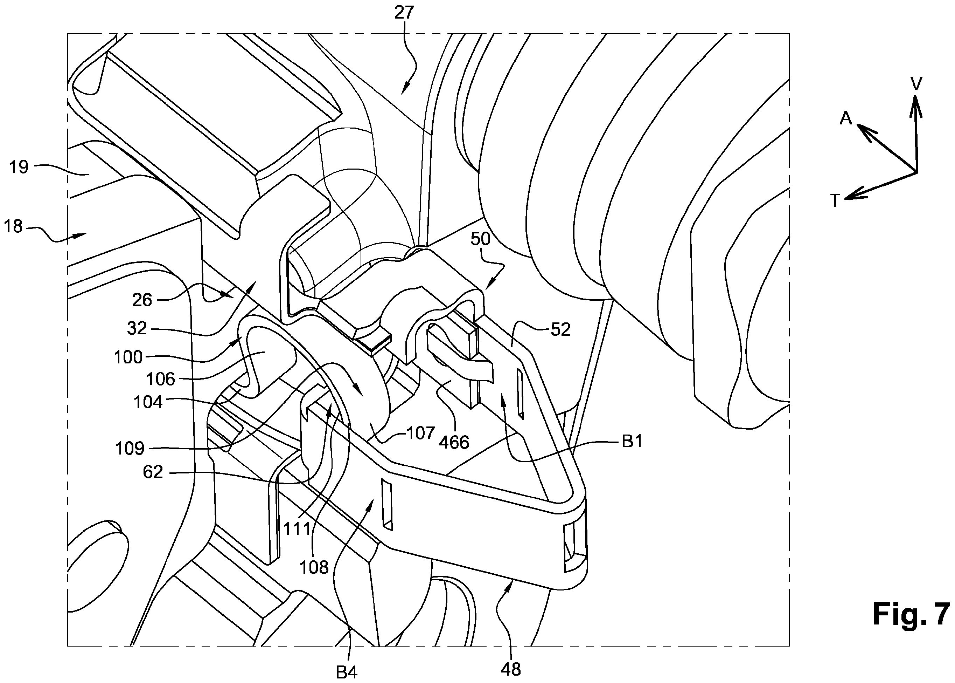

A titre d'exemple non limitatif, comme illustré à la figure 7, le ressort de rappel élastique 48 est relié et fixé de manière indirecte à un bras du support fixe 14, c'est à dire à une glissière 32 équipant le bras 27 associé.

Plus précisément, la portion de fixation 50 du ressort de rappel élastique 48 sur le support fixe 14 comporte une patte de fixation 52 qui s'étend axialement vers l'avant selon une direction parallèle à la direction de coulissement du patin de freinage 18, tandis que l'aile verticale 34 de la glissière 32 associée à ce ressort comporte une languette de fixation 466 qui s'étend axialement vers l'arrière. La patte de fixation 52 et la languette de fixation 466 comportent des moyens complémentaires de liaison par coopération de formes complémentaires qui permettent un assemblage des deux composants par emboîtement élastique selon la direction axiale.

On voit que tant la patte de fixation 52 que la languette de fixation sont chacune une bande plane verticale et d'orientation axiale.

La languette de fixation 466 s'étend dans le prolongement de l'aile verticale 34, et la patte de fixation 52 s'étend dans le prolongement de la branche de raccordement B4.

Selon l'invention, la patte active 62 est conformée pour coopérer avec une branche du ressort de patin 100, c'est à dire pour agir de manière indirecte sur la plaque porte-garniture 19.

A cet effet, la patte active 62 s'étend dans un plan transversal orthogonal au plan de la branche de raccordement B4, en direction de la première branche B1, et elle coopère avec la face avant concave 111 du tronçon arrière 109 en arc de cylindre circulaire de la branche incurvée 108 du ressort de patin 100.

La patte active 62 présente un profil incurvé dont la face arrière convexe 61 est un tronçon d'arc de cylindre circulaire orienté axialement vers l'arrière et qui est apte à coopérer avec la face avant concave 111 de la branche incurvée 108 du ressort de patin 100.

L'invention n'est pas limitée au mode particulier de fixation du ressort de rappel élastique 48 sur le support fixe 14.

Les deux ressorts équipant un patin de freinage à ses deux extrémités transversales opposées ne sont ici pas identiques.

Un ensemble ou kit de remplacement d'un jeu usagé de patins de freinage 18 comporte, pour chaque patin de freinage, un patin de freinage 18 neuf proprement dit équipé d'une paire de ressorts de rappel élastique 48 constituant une paire de ressorts de rappel élastique appariés au patin de freinage associé.

Le kit de remplacement peut aussi comporter, pour chaque patin de freinage, un patin neuf équipé de ses deux ressorts de patin 100.

## Revendications

1. Frein à disque (10) de véhicule automobile qui comporte:
- un disque (12) de frein qui s'étend dans un plan transversal à un axe (A) d'orientation axiale de rotation du disque ;
- un support (14) fixe par rapport à un châssis du véhicule ;
- au moins un patin de freinage (18) qui comporte une plaque transversale verticale porte-garniture (19) :
-- qui porte une garniture de friction (24) dont une face transversale de friction (25) coopère avec une piste de freinage (22) associée du disque (12), le patin de freinage (18) étant monté coulissant axialement dans le support fixe (14) entre une position avant active dans laquelle ladite face (25) de friction est en appui contre la piste de freinage associée (22) du disque (12), et une position arrière inactive dans laquelle ladite face (25) de friction est espacée axialement de ladite piste de freinage associée du disque, d'un jeu (J1) déterminé de fonctionnement ;
-- qui comporte, à chacune de ses deux extrémités transversales opposées, une oreille latérale (26) d'orientation transversale qui est montée coulissante dans une coulisse (28) associée du support fixe (14) ;
-- dont chaque oreille latérale (26) est munie d'un ressort de patin (100) qui est fixé sur l'oreille latérale associée ;
- et au moins un ressort de rappel élastique (48) du patin de freinage (18) vers sa position inactive comportant :
-- une portion de fixation (50) du ressort de rappel élastique (48) sur le support fixe (14) ;
-- une branche (B4) de raccordement, d'orientation axiale parallèle à la direction de coulissement du patin de freinage, qui se prolonge par une patte active (62) qui agit sur le patin de freinage (18),
**caractérisé en ce que** ladite patte active (62) agit sur une branche (108) du ressort de patin associé (100).

2. Frein à disque selon la revendication 1, **caractérisé en ce que** :
- ladite branche (108) du ressort de patin (100) s'étend dans un plan vertical orthogonal au plan de la plaque porte-garniture (19), et est une branche incurvée (108) dont la convexité est orientée axialement vers l'arrière ; et
- ladite patte active (62) s'étend dans un plan transversal orthogonal au plan de la branche de raccordement (B4) et coopère avec une portion concave (109, 111) de ladite branche incurvée (108) du ressort de patin (100).

3. Frein à disque selon la revendication 2, **caractérisé en ce que** la patte active (62) présente un profil incurvé dont la convexité (61) est orientée axialement vers l'arrière et qui est complémentaire du profil de ladite portion concave (109, 111).

4. Frein à disque selon la revendication 3, **caractérisé en ce que** ladite portion concave (111) de la branche incurvée (108) du ressort de patin (100) est une portion de profil cylindrique circulaire.

5. Frein à disque selon la revendication 1, **caractérisé en ce que** chaque ressort de patin (100) comporte une branche (106) de fixation qui pince élastiquement l'oreille latérale (26) pour assurer la fixation du ressort de patin (100) sur l'oreille latérale (26).

6. Frein à disque selon la revendication 2, **caractérisé en ce que** :
- la portion de fixation (50) du ressort de rappel élastique (48) sur le support fixe (14) est reliée à l'extrémité d'une première branche (B1) du ressort de rappel élastique (48) d'orientation axiale parallèle à la direction de coulissement du patin de freinage (18) ; et
- ladite branche (108) du ressort de patin (100) s'étend dans un plan vertical entre la première branche (B1) et la branche de raccordement (B4) du ressort de rappel élastique (48).

7. Frein à disque (10) selon la revendication 6, **caractérisé en ce que** ladite branche (B1, B4) du ressort de rappel élastique (48) est une branche rigide conformée en une bande qui s'étend dans un plan parallèle à un plan axial.

8. Frein à disque (10) selon la revendication 1, **caractérisé en ce que** le ressort de rappel élastique (48) comporte des moyens de rattrapage d'un jeu d'usure (J2) de la garniture de friction (24) du patin de freinage (18), qui se déforment plastiquement lorsqu'une course du patin de freinage jusqu'à sa position active de freinage, est supérieure audit jeu déterminé de fonctionnement (J1).

9. Frein à disque (10) selon la revendication 1, **caractérisé en ce que** le ressort de rappel élastique (48) est réalisé en une seule pièce par découpe et formage d'une feuille de matériau.

10. Ressort (48) de rappel élastique axial d'un patin de freinage (18), d'un frein à disque (12) selon l'une quelconque des revendications 1 à 9, vers une position inactive, dans lequel le ressort de rappel élastique (48) comporte :
- une portion de fixation (50) du ressort de rappel élastique (48) sur le support fixe (14) qui est reliée à l'extrémité d'une première branche (B1) du ressort de rappel élastique (48) ;
- une branche (B4) de raccordement, d'orientation axiale parallèle à la direction de coulissement du patin de freinage (18), qui se prolonge par une parte active (62) qui coopère avec une partie associée du patin de freinage (18),
**caractérisé en ce que** ladite patte active (62) présente un profil (61) de forme complémentaire de celui d'une branche incurvée (108) d'un ressort de patin équipant une oreille latérale (26) de la plaque porte garniture (19) du patin de freinage (18).

11. Ressort selon la revendication 10, **caractérisé en ce que** ladite patte active (62) s'étend dans un plan orthogonal à la direction axiale de la branche de raccordement (B4).

12. Ressort selon la revendication 10, **caractérisé en ce que** ladite patte active (62) présente un profil (61) en arc de cylindre dont la convexité est orientée axialement vers l'arrière.

13. Kit de remplacement pour un frein à disque de véhicule automobile selon l'une quelconque des revendications 1 à 9, **caractérisé en ce qu'**il comporte au moins un patin de freinage (18) et deux ressorts (48) de rappel élastique appariés audit patin de freinage (18).

14. Kit de remplacement selon la revendication 13, **caractérisé en ce qu'**il comporte de plus deux ressorts (100) de montage du patin de freinage dans le frein à disque.

## Patentansprüche

1. Scheibenbremse (10) eines Automobilfahrzeugs, die umfasst:
- eine Bremsscheibe (12), die sich in einer Ebene transversal zu einer Drehachse (A) der Scheibe mit axialer Orientierung erstreckt;
- einen Träger (14), der bezüglich eines Rahmens des Fahrzeugs fest ist;
- wenigstens einen Bremsklotz (18), der eine transversale vertikale Belagtrageplatte (19) umfasst:
- - die einen Reibbelag (24) trägt, von dem eine transversale Reibfläche (25) mit einer zugeordneten Bremsbahn (22) der Scheibe (12) zusammenwirkt, wobei der Bremsklotz (18) in dem festen Träger (14) axial verschiebbar montiert ist zwischen einer vorderen aktiven Position, in der die Reibfläche (25) in Anlage gegen die zugeordnete Bremsbahn (22) der Scheibe (12) ist, und einer hinteren inaktiven Position, in der die Reibfläche (25) axial von der zugeordneten Bremsbahn der Scheibe um ein bestimmtes Funktionsspiel (J1) beabstandet ist;
- - die an jedem ihrer zwei entgegengesetzten transversalen Enden ein laterales Ohr (26) mit transversaler Orientierung umfasst, das verschiebbar in einer zugeordneten Schiebeführung (28) des festen Trägers (14) montiert ist;
- - von der jedes laterale Ohr (26) mit einer Klotzfeder (100) ausgestattet ist, die am zugeordneten lateralen Ohr befestigt ist;
- und wenigstens eine Feder (48) zur elastischen Rückstellung des Bremsklotzes (18) in Richtung seiner inaktiven Position, umfassend:
- - einen Bereich (50) zur Befestigung der elastischen Rückstellfeder (48) am festen Träger (14);
- - einen Anschlussarm (B4) mit axialer Orientierung parallel zur Schieberichtung des Bremsklotzes, der durch eine aktive Lasche (62) verlängert ist, die auf den Bremsklotz (18) wirkt,
**dadurch gekennzeichnet, dass** die aktive Lasche (62) auf einen Arm (108) der zugeordneten Klotzfeder (100) wirkt.

2. Scheibenbremse nach Anspruch 1, **dadurch gekennzeichnet, dass**:
- der Arm (108) der Klotzfeder (100) sich in einer vertikalen Ebene orthogonal zur Ebene der Belagtrageplatte (19) erstreckt und ein gekrümmter Arm (108) ist, dessen Konvexität axial nach hinten orientiert ist; und
- die aktive Lasche (62) sich in einer transversalen Ebene orthogonal zur Ebene des Anschlussarms (B4) erstreckt und mit einem konkaven Bereich (109, 111) des gekrümmten Arms (108) der Klotzfeder (100) zusammenwirkt.

3. Scheibenbremse nach Anspruch 2, **dadurch gekennzeichnet, dass** die aktive Lasche (62) ein gekrümmtes Profil aufweist, dessen Konvexität (61) axial nach hinten orientiert ist und komplementär zum Profil des konkaven Bereichs (109, 111) ist.

4. Scheibenbremse nach Anspruch 3, **dadurch gekennzeichnet, dass** der konkave Bereich (111) des gekrümmten Arms (108) der Klotzfeder (100) ein Bereich mit kreiszylindrischem Profil ist.

5. Scheibenbremse nach Anspruch 1, **dadurch gekennzeichnet, dass** jede Klotzfeder (100) einen Befestigungsarm (106) umfasst, der das laterale Ohr (26) elastisch einklemmt, um die Befestigung der Klotzfeder (100) am lateralen Ohr (26) sicherzustellen.

6. Scheibenbremse nach Anspruch 2, **dadurch gekennzeichnet, dass**:
- der Befestigungsbereich (50) der elastischen Rückstellfeder (48) am festen Träger (14) mit dem Ende eines ersten Arms (B1) der elastischen Rückstellfeder (48) mit einer axialen Orientierung parallel zur Schieberichtung des Bremsklotzes (18) verbunden ist; und
- der Arm (108) der Klotzfeder (100) sich in einer vertikalen Ebene zwischen dem ersten Arm (B1) und dem Anschlussarm (B4) der elastischen Rückstellfeder (48) erstreckt.

7. Scheibenbremse (10) nach Anspruch 6, **dadurch gekennzeichnet, dass** der Arm (B1, B4) der elastischen Rückstellfeder (48) ein starrer Arm ist, der als ein Band gestaltet ist, das sich in einer Ebene parallel zu einer axialen Ebene erstreckt.

8. Scheibenbremse (10) nach Anspruch 1, **dadurch gekennzeichnet, dass** die elastische Rückstellfeder (48) Mittel zur Kompensation eines Verschleißspiels (J2) des Reibbelags (24) des Bremsklotzes (18) umfasst, die sich plastisch verformen, wenn ein Weg des Bremsklotzes bis zu seiner aktiven Bremsposition größer ist als das bestimmte Funktionsspiel (J1).

9. Scheibenbremse (10) nach Anspruch 1, **dadurch gekennzeichnet, dass** die elastische Rückstellfeder (48) einstückig durch Schneiden und Formen eines Materialblatts realisiert ist.

10. Feder (48) zur elastischen axialen Rückstellung eines Bremsklotzes (18) einer Scheibenbremse (12) nach einem der Ansprüche 1 bis 9 in Richtung einer inaktiven Position, wobei die elastische Rückstellfeder (48) umfasst:
- einen Bereich (50) zur Befestigung der elastischen Rückstellfeder (48) am festen Träger (14), der mit dem Ende eines ersten Arms (B1) der elastischen Rückstellfeder (48) verbunden ist;
- einen Anschlussarm (B4) mit axialer Orientierung parallel zur Schieberichtung des Bremsklotzes (18), der durch eine aktive Lasche (62) verlängert ist, die mit einem zugeordneten Teil des Bremsklotzes (18) zusammenwirkt,
**dadurch gekennzeichnet, dass** die aktive Lasche (62) ein Profil (61) mit einer Form komplementär zu jener eines gekrümmten Arms (108) einer Klotzfeder aufweist, mit der ein laterales Ohr (26) der Belagtragplatte (19) des Bremsklotzes (18) ausgestattet ist.

11. Feder nach Anspruch 10, **dadurch gekennzeichnet, dass** die aktive Lasche (62) sich in einer Ebene orthogonal zur axialen Richtung des Anschlussarms (B4) erstreckt.

12. Feder nach Anspruch 10, **dadurch gekennzeichnet, dass** die aktive Lasche (62) ein Zylinderbogenprofil (61) aufweist, dessen Konvexität axial nach hinten orientiert ist.

13. Ersatzkit für eine Scheibenbremse eines Automobilfahrzeugs nach einem der Ansprüche 1 bis 9, **dadurch gekennzeichnet, dass** es wenigstens einen Bremsklotz (18) und zwei elastische Rückstellfedern (48) umfasst, die zu dem Bremsklotz (18) gepaart sind.

14. Ersatzkit nach Anspruch 13, **dadurch gekennzeichnet, dass** es ferner zwei Federn (100) zur Montage des Bremsklotzes in der Scheibenbremse umfasst.

## Claims

1. A disc brake (10) for an automotive vehicle which includes:
- a brake disc (12) which extends in a plane transverse to a disc rotational axis (A) with an axial orientation;
- a fixed support (14) relative to a chassis of the vehicle;
- at least one braking pad (18) which includes a vertical transverse lining-holder plate (19);
-- which holds a friction lining (24) a transverse friction face (25) of which cooperates with an associated braking surface (22) of the disc (12), the braking pad (18) being axially slidably mounted in the fixed support (14) between a front active position in which said friction face (25) is bearing against the associated braking surface (22) of the disc (12), and a rear inactive position in which said friction face (25) is axially spaced apart from said associated braking surface of the disc, by a determined running clearance (J1) ;
-- which includes, at each of both its opposite transverse ends, a lateral lug (26) with a transverse orientation which is slidably mounted in an associated slide (28) of the fixed support (14);
-- each lateral lug (26) of which is fitted with a pad spring (100) which is fastened to the associated lateral lug;
- and at least one elastic return spring (48) for elastically returning the braking pad (18) to its inactive position including:
- a fastening portion (50) for fastening the elastic return spring (48) to the fixed support (14);
- a connecting branch (B4), with an axial orientation parallel to the sliding direction of the braking pad, which is extended to an active tab (62) which acts on the braking pad (18),
**characterised in that** said active tab (62) acts on a branch (108) of the associated pad spring (100).

2. The disc brake according to claim 1, **characterised in that**:
- said branch (108) of the pad spring (100) extends in a vertical plane orthogonal to the plane of the lining-holder plate (19), and is a curved branch (108) the convexity of which is axially oriented backwardly; and
- said active tab (62) extends in a transverse plane orthogonal to the plane of the connecting branch (B4) and cooperates with a concave portion (109, 111) of said curved branch (108) of the pad spring (100).

3. The disc brake according to claim 2, **characterised in that** the active tab (62) has a curved profile the convexity (61) of which is axially oriented backwardly and which is complementary to the profile of said concave portion (109, 111).

4. The disc brake according to claim 3, **characterised in that** said concave portion (111) of the curved branch (108) of the pad spring (100) is a portion with a circular cylindrical profile.

5. The disc brake according to claim 1, **characterised in that** each pad spring (100) includes a fastening branch (106) which elastically nips the lateral lug (26) to provide fastening of the pad spring (100) to the lateral lug (26).

6. The disc brake according to claim 2, **characterised in that**:
- the fastening portion (50) for fastening the elastic return spring (48) to the fixed support (14) is connected to the end of a first branch (B1) of the elastic return spring (48) with an axial orientation parallel to the sliding direction of the braking pad (18); and
- said branch (108) of the pad spring (100) extends in a vertical plane between the first branch (B1) and the connecting branch (B4) of the elastic return spring (48).

7. The disc brake (10) according to claim 6, **characterised in that** said branch (B1, B4) of the elastic return spring (48) is a rigid branch shaped as a strip which extends in a plane parallel to an axial plane.

8. The disc brake (10) according to claim 1, **characterised in that** the elastic return spring (48) includes means for compensating for a wear clearance (J2) of the friction lining (24) of the braking pad (18), which plastically deform when a stroke of the braking pad up to its active braking position, is greater than said determined running clearance (J1).

9. The disc brake (10) according to claim 1, **characterised in that** the elastic return spring (48) is made as a single piece by cutting and forming a sheet material.

10. An elastic return spring (48) for axially elastically returning a braking pad (18), of a disc brake (12) according to any of claims 1 to 9, to an inactive position, wherein the elastic return spring (48) includes:
- a fastening portion (50) for fastening the elastic return spring (48) to the fixed support (14) which is connected to the end of a first branch (B1) of the elastic return spring (48);
- a connecting branch (B4), with an axial orientation parallel to the sliding direction of the braking pad (18), which is extended to an active part (62) which cooperates with an associated part of the braking pad (18),
**characterised in that** said active tab (62) has a profile (61) with a shape complementary to that of a curved branch (108) of a pad spring fitting a lateral lug (26) of the lining-holder plate (19) of the braking pad (18).

11. The spring according to claim 10, **characterised in that** said active tab (62) extends in a plane orthogonal to the axial direction of the connecting branch (B4).

12. The spring according to claim 10, **characterised in that** said active tab (62) has an arc of cylinder-shaped profile (61) the convexity of which is axially oriented backwardly.

13. A replacement kit for a disc brake of an automotive vehicle according to any of claims 1 to 9, **characterised in that** it includes at least one braking pad (18) and two elastic return springs (48) paired with said braking pad (18).

14. The replacement kit according to claim 13, **characterised in that** it includes more than two springs (100) for mounting the braking pad into the disc brake.
